# EUROPEAN PATENT APPLICATION

(11) **EP 2 651 096 A1**
(43) Date of publication of application: **16.10.2013**
(21) Application number: 13162684.8
(22) Date of filing: 08.04.2013
(51) Int. Cl.: H04L 29/06, H04L 29/08

(54) **HD voice recovery**

(30) Priority: 09.04.2012 EP 12163505
(71) Applicant: Koninklijke KPN N.V., 2516 CK The Hague (NL)
(72) Inventor: Veenstra, Pieter, 2518 HR The Hague (NL); Span, Pieter, 3826CN Amersfoort (NL); van Erp, Peter, 2611 MX Delft (NL)
(74) Representative: Wuyts, Koenraad Maria

(57) **Abstract**

A request is processed for setting up a communication session via a communication network between a first communication device and a second communication device. The communication network comprises a first sub-network that is configured for providing a higher quality of service, and a second sub-network that is configured for providing a lower quality of service. The first communication device is configured for communicating via the communication network using the higher quality of service. The communication is routed via the first sub-network or via the second sub-network in dependence of whether the second communication device is configured using the higher quality of service for communicating with the first communication device.

## Description

### FIELD OF THE INVENTION

The invention relates to a method of processing a request for setting up a communication session via a communication network between a first communication device and a second communication device.

### BACKGROUND ART

The consumer market and business market have been adopting the smartphone at an ever increasingly faster rate. A smartphone is an advanced mobile communication device with a powerful computing platform, suitable for graphics and video processing, and with adequate data storage capability for software applications and electronic media files. A typical modern smartphone further includes a high-resolution touch screen, web browsing capability that can access and properly display standard web pages, and provides high-speed data access via Wi-Fi and mobile broadband.

Wideband audio, also referred to as High-Definition Voice, is an audio technology used in telephony and extends the frequency range of audio signals transmitted over telephone lines, resulting in higher quality speech. The range of the human voice extends from 80 Hz to 14 kHz but traditional, narrowband telephone calls limit audio frequencies to the range of 300 Hz to 3.4 kHz. Wideband audio transmits in the audio frequency range of 50 Hz to 7 kHz or higher.

Smartphones are perfectly well capable of broadband data communication and, therefore, of wideband audio communication.

However, the conventional, circuit-switched digital telephone network, with its interconnections based on time-division-multiplexing (TDM), is not suitable for wideband audio communication. In contrast, a packet-switched data communication network, with its interconnections based on the Internet Protocol (IP), such as the Internet, is highly suitable for broadband communication and, therefore, for wideband audio communication.

### SUMMARY OF THE INVENTION

For several reasons, operators, and especially mobile operators, are not likely to start exploiting a packet-switched data communication network for wideband audio communication on a large scale soon.

One of the reasons is that the currently installed base of circuit-switched digital (mobile) networks is operating well, reliably and in a cost-effective manner. In recent years, most mobile operators have upgraded these networks with bearer-independent call control and by implementing IP transport on the bearer level. The possibility of end-to-end IP transport on bearer level enables to exploit wideband audio communication (High-Definition Voice) on the upgraded circuit-switched networks. End-devices that facilitate wideband audio-codecs can negotiate about an appropriate codec, which is then supported by the intermediate network.

Although most circuit-switched mobile telephony networks are already being deployed with IP-based bearer transport, interconnection between these networks is still TDM-based. Thus while High-Definition Voice calls can be made within the network, they are not supported across different networks because of the transcoding that is required by the intermediate TDM interconnection. Inter-network wideband audio communication will be possible after introduction of a direct IP-based interconnection between the circuit-switched networks. A complete conversion from TDM-based interconnections to IP-based interconnections, however, will bring along operational and financial risks, as well as extra investments.

Another reason is that the capacity of the switches (still using TDM-like logic circuitry), currently installed in the telephony network, will decrease dramatically if the signaling traffic is changed from ISUP (required for TDM-based interconnections) to SIP (required for IP-based interconnections). As known, the acronym "ISUP" stands for "ISDN User Part" and refers to part of the Signaling System #7 which is used to set up telephone calls in public switched telephone networks (PSTNs). The acronym "ISDN" stands for "Integrated Services Digital Network" and refers to a set of communications standards for simultaneous digital transmission of voice, video, data, and other network services over the traditional circuits of the PSTN. The acronym "SIP" stands for "Session Initiation Protocol" and refers to a signaling protocol, defined by the Internet Engineering Task Force (IETF) and used for control of multimedia sessions, e.g., communication sessions such as voice calls or video calls over IP, instant messaging, gaming over the Internet. SIP is used for establishing, modifying and terminating unicast sessions or multicast sessions. A session may consist of one or more media streams. The voice stream communication and the video stream communication in SIP applications are typically carried over the Real-time Transport Protocol (RTP).

Yet another reason is that wideband audio communication will only be possible, if the telephone of the calling party as well as the telephone of the called party are capable of processing wideband audio, and if the call is routed via an IP-based interconnection end-to-end. Accordingly, successfully setting up a wideband audio connection will have a relatively low chance until smartphones make up the vast majority of telephones in operational use, and until each of the telephony networks between any of the majority of calling parties and any of the majority of called parties is capable of handling IP-based interconnections.

The inventors therefore propose a method for processing requests for setting up a telephony call in order to determine whether to route a call either via the conventional, TDM-based circuit-switched interconnection network or via a packet-switched interconnection network. The processing of a particular request includes determining if the telephone call, whose setting up is requested, is capable of being set up as a wideband audio communication. If the telephone call is not capable of being set up as a wideband audio communication, the telephone call is being routed via the conventional circuit-switched telephony network.

Whether or not the telephone call is capable of being set up as a wideband audio communication depends on whether the communication device of the calling party (the "first communication device") as well as the communication device of the called party (the "second communication device") have been configured for wideband audio communication. Whether or not the telephone call is capable of being set up as a wideband audio communication may also depend on whether both the calling party and the called party are entitled to use wideband audio communication based on their respective subscriptions to the communication service of their respective service provider. That is, using a communication device configured for wideband audio communication need not imply that the user is entitled to use the wideband audio communication service of his/her service provider as the entitlement may depend on the service package to which the user has subscribed.

What has been illustrated above with reference to wideband audio is applicable to a more generic scenario of setting up a communication session (e.g., audio, video, or both) via a communication network wherein the quality of service depends on the chosen routing via different sub-networks connecting the participating communication devices.

More specifically, the invention relates to a method of processing a request for setting up a communication session via a communication network between a first communication device and a second communication device. The communication network comprises a first sub-network configured for providing a higher quality of service for communicating via the communication network. The communication network also comprises a second sub-network configured for providing a lower quality of service for the communicating via the communication network. For example, the first sub-network provides a higher quality of service as a result of the first sub-network having an IP-based (packet-switched) network configuration, whereas the second sub-network provides a lower quality of service as a result of the second sub-network having a TDM-based (circuit-switched) network configuration. As another example, the first sub-network provides a higher quality of service as a result of the first sub-network being configured for supporting wideband audio communication (conducted by means of High-Definition Voice codecs and, possibly, providing higher bandwidth communication), whereas the second sub-network provides a lower quality of service as a result of the second sub-network not supporting wideband audio communications, e.g., because the second sub-network is not capable of handling High-Definition Voice codecs or because the second sub-network is configured for lower bandwidth communications only. In this other example, the first sub-network and the second sub-network may each have a packet-switched network configuration. The first sub-network and the second sub-network may even be the same physical network and the difference between higher quality of service and lower quality of service resides in the difference between a higher data rate and a lower data rate reserved for the communication. The method comprises controlling a routing of the communication via the first sub-network or via the second sub-network in dependence on whether the first communication device and the second communication device are configured for using the higher quality of service for communicating with each other.

In an embodiment of the method, the controlling comprises determining for the first communication device if the first communication device has one or more first communication capabilities configured for using the higher quality of service; and determining for the second communication device if the second communication device has one or more second communication capabilities configured for using the higher quality of service. If the first communication device has a specific first communication capability configured for communicating using the higher quality of service, and if the second communication device has a specific second communication capability configured for communicating using the higher quality of service, then it is determined whether the specific first communication capability and the specific second communication capability enable the communication session between the first communication device and the second communication device using the higher quality of service. If the first communication capability and the second communication capability enable the communication session using the higher quality of service, then the communicating is routed via the first sub-network (in the absence of other constraints imposed on the communicating such as service packages subscribed to by the user of the first communication device and the user of the second communication device), and the communicating is routed via the second sub-network if the first communication capability and the second communication capability do not enable the communication session using the higher quality of service.

In order to use the higher quality of service in the communication session between the first communication device and the second communication device, the first communication device needs to have first communication capabilities that support the higher quality of service and the second communication device needs to have second communication capabilities that support the higher quality of service. For example, the one or more first communication capabilities relate to, e.g., the one or more first codecs available at the first communication device, or the first data processing power available at the first communication device. Likewise, the one or more second communication capabilities relate to, e.g., the one or more second codecs available at the second communication device, or the second data processing power available at the second communication device. If both the first communication device and the second communication device have respective codecs that support the higher quality of service, then a communication session is possible, in principle, that uses the higher quality of service, optionally using transcoding operations in the communication between the first communication device and the second communication device.

Once it has been concluded that the first communication device and the second communication device have communication capabilities configured for communicating using the higher quality of service, a communication session can, but need not, be set up using the higher quality of service. Other criterions may be considered before setting up a communication session using the higher quality of service. For example, despite the fact that both the first communication device and the second communication device appear to have suitable communication capabilities for communicating with each other using the higher quality of service, it may be needed to check if the first user of the first communication device and the second user of the second communication device are actually entitled to communicate with one another using the higher quality of service, e.g., based on their respective service packages provided by their respective communication service providers to which the respective users have subscribed. These are authorization issues to be handled by the respective service providers.

In a further embodiment of the method of the invention, the determining of whether the first communication device has one or more first communication capabilities configured for using the higher quality of service comprises at least one of the following: identifying one or more first communication parameters, representative of at least one first communication capability and declared by the first communication device during execution of a negotiation protocol executed between the first communication device and the second communication device during an attempt to set up the communication session; and consulting data storage listing one or more first communication parameters representative of at least one first communication capability.

As to the execution of the negotiation protocol consider, for example, a scenario wherein the setting up of the communication session between the first communication device and the second communication device uses a negotiation protocol for negotiating one or more communication parameters. A known example of such negotiation protocol is Session Description Protocol (SDP) that is used in, e.g., SIP. Parameters (e.g., port numbers, protocols, codecs) for these media streams are defined and negotiated using the SDP data which is transported in the SIP data packets. SDP is used for describing multimedia sessions for the purpose of session announcement, session invitation and other forms of session initiation. SDP provides information about, e.g., the type of communication media (audio, video, etc.), the transport protocol used (e.g., RTP/UDP/IP, H.320, etc.) the format of the media (e.g., H.261 video, MPEG video, etc.), information about how to receive the media (e.g., addresses on the communication network, ports at the communication devices, etc.); codecs available (e.g., G.711, GIPS Enhanced G.711, G.729, etc.). Accordingly, inspection of the SIP parameters and/or SDP data communicated in the SIP data packets during the initialization phase of the communication session discloses the communication capabilities of the entities, between which the communication session is to be set up.

As to consulting data storage, consider a first scenario wherein the communication session is requested by the first communication device. The user of the first communication device has subscribed to the communication services provided by a certain communication service provider. The service provider maintains the data storage with information about the service package subscribed to by the user of the first communication device and/or about the communication capabilities of the first communication device. Accordingly, upon receiving the request from the first communication device for a communication session, the service provider can determine if the first communication device is configured and authorized for a communication session with a higher quality of service by consulting this data storage. Accordingly, in the first scenario it is determined internally at the service provider whether or not the initiating first communication device is suitable and authorized for the use of higher quality of service

As to consulting the data storage, consider a second scenario, wherein the data storage comprises a database that is operative to store the one or more first communication parameters as declared by the first communication device during the execution of the negotiation protocol during a setting up of one or more previous communication sessions involving the first communication device.

In this second scenario, a database is maintained for accumulating information about respective sets of communication parameters that have been associated with respective ones of a population of identifiers (e.g., addresses) used in the past to connect communication devices via the communication network. The information is acquired from monitoring information items exchanged between communication devices during execution of one or more negotiation protocols, e.g., by inspection of the SIP parameters and SDP data communicated in the SIP data packets. Upon detecting, at some particular node in the communication network, a request for setting up a communication session between the first communication device and the second communication device via the communication network, the first communication device is identified at the particular node via a first identifier and the second communication device is identified at the particular node via a second identifier. As identifiers, the well-known telephone numbers or, for mobile networks, the MSISDSN numbers may be used. Alternatively, or in addition, one may use the unique identifiers of the communication devices themselves, typically the IMSI for mobile communication devices. The acronym "MSISDSN" stands for "Mobile Subscriber Integrated Services Digital Network" and the MSISDN number is a number uniquely identifying a subscription in a GSM or in a UMTS mobile network. The acronym "IMSI" stands for "International Mobile Subscriber Identity" is a unique identification of the Subscriber Identity Module (SIM), a specific piece of integrated circuitry in a mobile telephony device. The identifiers are used as entries to the database to check the communication parameters and, therefore, the communication capabilities of one or both of the first communication device and the second communication device. If the identifiers of one or of both of the first communication device and the second communication device are not present in the database, the relevant identifier will be added, together with the relevant communication parameters associated with the relevant identifier. Accordingly, inspection of the negotiation protocol reveals whether or not a communication session with higher quality of service is feasible between the first communication device and the second communication device. If the database stores the relevant identifiers, inspection of the database reveals whether or not a communication session with higher quality of service is feasible between the first communication device and the second communication device.

Likewise, the determining of whether the second communication device has one or more second communication capabilities configured for using the higher quality of service comprises at least one of the following: identifying one or more second communication parameters, representative of at least one second communication capability and declared by the second communication device during execution of a negotiation protocol executed between the first communication device and the second communication device during an attempt to set up the communication session; and consulting data storage, e.g., at the service provider of the second communication device, listing one or more second communication parameters representative of at least one second communication capability. The data storage may comprise a database that is operative to store the one or more second communication parameters as declared by the second communication device during the execution of the negotiation protocol during a setting up of one or more previous communication sessions involving the second communication device.

### BRIEF DESCRIPTION OF THE DRAWING

The invention is explained in further detail, by way of example and with reference to the accompanying drawing, wherein:
Fig.1 is a block diagram of a system in the invention; and
Fig.2 is a process diagram of a method in the invention.

Throughout the Figures, similar or corresponding features are indicated by same reference numerals.

### DETAILED EMBODIMENTS

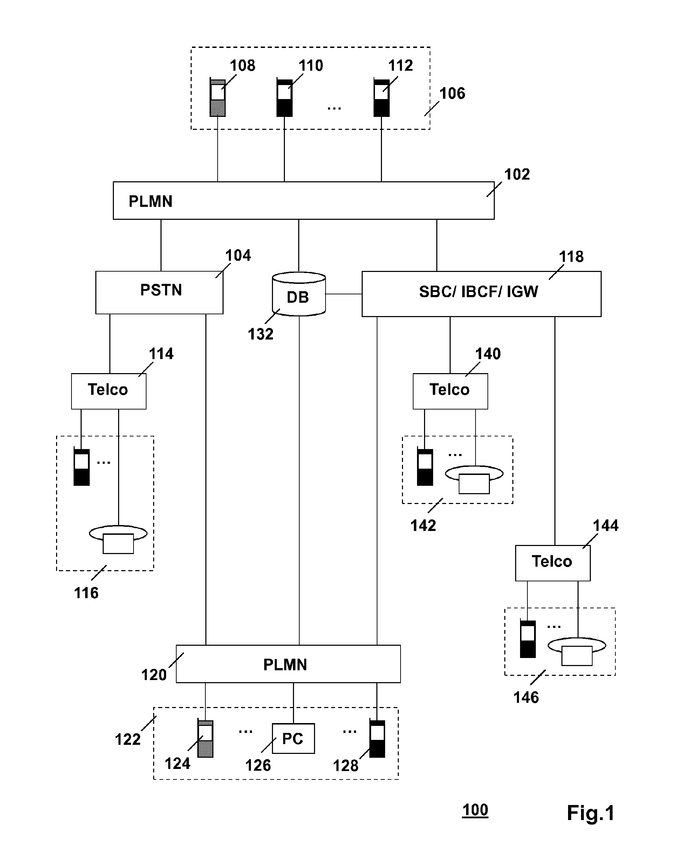

Fig.1 is a block diagram of a communication network 100 operating according to a method in the invention. The communication network 100 comprises a first Public Land Mobile Network (PLMN) 102 and a Public Switched Telephone Network (PSTN) 104. The first PLMN 102 serves a first community 106 of mobile telephones, e.g., a first mobile telephone 108, a second mobile telephone 110, ..., and a third mobile telephone 112. The first mobile telephone 108 is a smartphone in this example, and will be referred to in this text as "the first smartphone 108".

The PSTN 104 is a circuit-switched digital telephone network, with its interconnections based on TDM, as discussed above. The PSTN 104 is connected to another circuit-switched sub-network 114, serving a second community 116 of landline telephones and mobile telephones.

The communication network 100 further comprises a set of Interconnect Gateways (IGW) 118. The IGW 118 is a packet-switched sub-network, with its interconnections based on IP, as discussed above. The IGW 118 is configured for Voice-over-IP (VoIP), including the support of wideband audio communications. The IGW 118 is connected to a second PLMN 120 that serves a third community 122 of VoIP-compatible communication devices such as a second smartphone 124, a personal computer (PC) 126, and a mobile telephone 128. The IGW 118 is connected to another packet-switched network 140 serving a third community 142 of landline telephones and mobile telephones, and to a further packet-switched network 144 serving a fourth community 146 of landline telephones and mobile telephones.

The IGW 118 may be regarded as a Session Border Controller (SBC) with an Interconnect Border Control Function (IBCF). As known, an SBC is regularly deployed in VoIP communication networks to exert control over the signaling and, usually, also over the setting up, conducting, and tearing down telephone calls or other interactive media communication sessions. An IBCF serves to control the admission and set-up of sessions traversing between the communication networks. Both SBC and IBCF are known entities, used in an IP Multimedia Subsystem (IMS), an architectural framework for delivering IP multimedia services. Similarly, one or more other SBCs (not shown) with an IBCF may be present at the first PLMN 102, the second PLMN 120, the other packet-switched network 140 and the further packet-switched network 144 as part of their packet-switched connections with other networks (not shown).

The PSTN 104 is also connected to the second PLMN 120, not using the higher quality of service, i.e., not using the wideband audio communication facility, of which the second PLMN 120 is capable of providing.

Now, assume that the first smartphone 108 is configured for wideband audio communication, and assume that the first smartphone 108 sends a request to the PLMN 102 for initiating a communication session with a destination that in this example is the second smartphone 124.

The first PLMN 102 has information available that the first smartphone 108 has onboard communication capabilities for wideband audio communication. For example, the first smartphone 108 provides, in the initial request its sends to a serving switch (a Mobile Switching Centre, or: MSC; not shown) of the first PLMN 102, information about the wideband audio codecs supported by the first smartphone 108. Moreover, the first PLMN 102 may have this information stored in advance, e.g., on the basis of the service package subscribed to by the user of the first smartphone 108. As the second smartphone 124 is not registered with a subscription to the services provided by the first PLMN 102, the first PLMN 102 does not know whether or not the destination, i.e., the second smartphone 124, is capable of wideband audio communication. Accordingly, the first PLMN 102 does not know beforehand whether to route the request via the PSTN 104 or via the IGW 118. Conventionally, information about the communication capabilities of the first communication device 108 and of the second communication device 124 form part of the BICC or SIP signaling procedure at the first PLMN 102 on the basis of which the serving MSC and other nodes of the communication network will be able to determine the routing. For example, codec negotiation is conventionally carried out via an IP connection to determine whether the codecs of the first communication device 108 and of the second communication device 124 do match. The outcome of the codec negotiation can be that the codecs do not match, as a result of which the higher quality of service, here: wideband audio communication, cannot be used. For completeness, the acronym "BICC" used above, stands for "Bearer-Independent Call Control" and refers to a known signaling protocol specified in ITU-T recommendations Q.1901, Q.1902 and Q.1950.

According to the invention, the IGW 118 is configured for accumulating in a database 132 information about codec lists conventionally exchanged during execution of a negotiation protocol, e.g., SDP, in past communication sessions involving destinations outside the first community 106. This information was exchanged during the execution of the negotiation protocol between any of the mobile telephones of the first community 106 and any other communication device being part of a community, not being the first community 106, and that is served by an external communication network which is interconnected to the first PLMN 102 by means of a packet-switched sub-network with interconnections based on IP. The information of the other communication device that was exchanged during the execution of the negotiation protocol can be copied into the database 132, together with an addressable identifier that can be associated with the other communication device (e.g., the MSISDN). The feature "addressable identifier" indicates that the identifier has been configured to enable addressing a communication device, or a person associated with the communication device, within the context of a communication session.

Therefore, upon receiving the request from the first smartphone 108, the first PLMN 102 consults the database 132 to verify if the current destination, i.e., the addressable identifier associated with the second smartphone 124, has been listed.

If the addressable identifier of the second smartphone 124 has been listed in the database 132, the first PLMN 102 checks if there is at least a particular one among the codecs, listed for the second smartphone 124, that enables wideband audio communication between the first smartphone 108 and the second smartphone 124. Information about the communication capabilities of the first smartphone 108 is available in the switch (not shown) of the first PLMN 102 which is serving the first smartphone 108. If the first smartphone 108 and the second smartphone 124 have compatible codecs for wideband audio communication, the first PLMN 102 routes the call via the IGW 118. If the first smartphone 108 and the second smartphone 124 do not have compatible codecs for wideband audio communication, the first PLMN 102 routes the call via the PSTN 104 to the packet-switched sub-network 120.

If the addressable identifier of the second smartphone 124 has not been listed in the database 132, the first PLMN 102 may route the call via the PSTN 104 to the second PLMN 120.

Alternatively, the first PLMN 102 attempts to set up the call with the second smartphone 124 to the second PLMN 120 via the IGW 118. At the same time, if the codec list of the first smartphone 108 is not yet present in the database 132, the codec list as declared by the first smartphone 108 is copied into the database 132, together with the addressable identifier of the first smartphone 108. If the second smartphone 124 responds to the invitation to enter negotiations using the negotiation protocol, the first operator receives the codec list as declared by the second smartphone 124 and attempts to find among the codecs of the declared codec list a particular one that is compatible with one or more codecs listed for the first smartphone 108 for purposes of wideband audio communication. At the same time, the codec list as declared by the second smartphone 124 is copied into the database 132, together with the addressable identifier of the second smartphone 124.

Multiple methods are feasible of copying the communication capabilities (e.g., the supported codecs) of the first smartphone 108 and of the second smartphone 124 into the database 132. An interface (not shown) with the IGW 118 may be used when calls are routed via this IGW 118. The interface is based on, e.g., the Diameter protocol as specified in RFC 3588. The Diameter protocol is a communication protocol used for authentication, authorization and accounting on computer networks. Alternatively, information about the communication capabilities of the first smartphone 108 may provided by the first PLMN 102, and the communication capabilities of the second smartphone 124 may be provided by the second PLMN 120 in a similar way, or as part of an off-line batch process.

In addition to copying into the database 132 the communication capabilities of the communication devices of the first community 106 connected to the first PLMN 102 and of the communication devices connected to the second PLMN 120, the communication capabilities of other communication devices may be copied into the database 132. This applies, for instance, to the calls routed via the IGW 118 to any of the communication devices of the third community 142 at the other packet-switched network 140, and to the calls routed via the IGW 118 to any of the communication devices of the fourth community 146 at the further packet-switched network 144, and to the calls routed between the other packet-switched network 140 and the further packet-switched network 144 via the IGW 118.

Accordingly, accumulating the codec lists in the database 132 enables to determine in advance whether wideband audio communication is feasible.

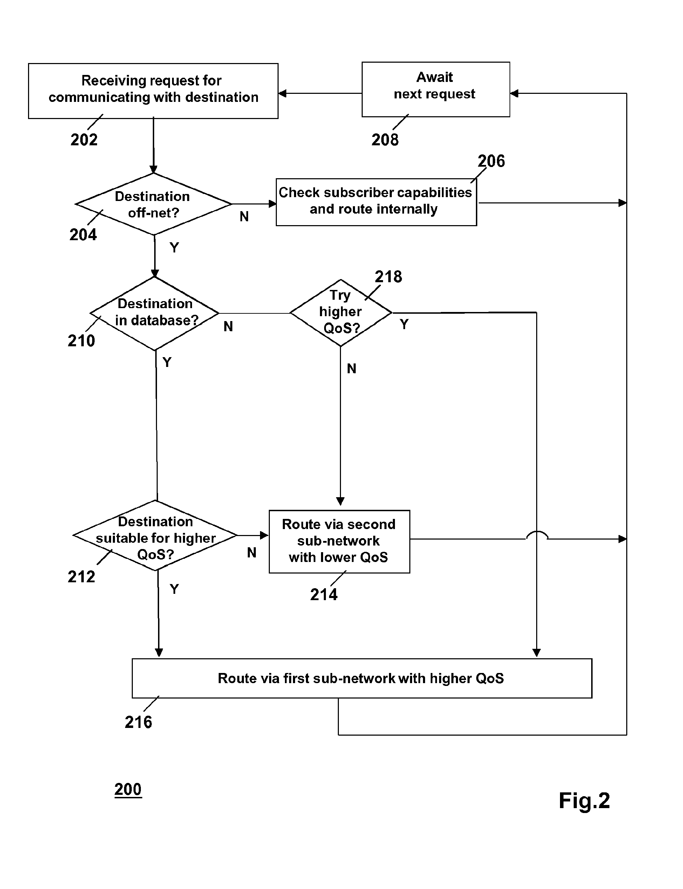

Fig.2 is a diagram illustrating a process 200 according to a method of the invention. As discussed earlier, the invention relates to a method of processing a request for setting up a communication session via a communication network between a first communication device and a second communication device. An example thereof has been discussed with reference to Fig.1. The communication network, e.g., communication network 100, comprises a first sub-network, e.g., the packet-switched second sub-network IGW 118, for providing a higher quality of service, e.g., wideband audio communication in the example of Fig.1, and a second sub-network, e.g., the PSTN 104, configured for providing a lower quality of service, e.g., standard (smaller band) audio communication. The first communication device, e.g., the first smartphone 108, is configured for using the higher quality of service. The method comprises controlling a routing of the communication via the first sub-network, bypassing the second sub-network, or via the second sub-network, in dependence on whether the second communication device is configured using the higher quality of service for communicating with the first communication device.

In a first step 202, a request is received for communicating with a certain destination on the communication network.

In a second step 204, it is determined whether or not the destination belongs to the part of the communication network under control of the operator receiving the request. If it is determined in the second step 204 that the destination is on the same part, the process 200 proceeds with a third step 206.

In the third step 206, the operator checks the capabilities of the communication devices involved by consulting the subscriber database and then routes the communication internally. The process 200 then proceeds with a fourth step 208 for awaiting a next request, and returns to the first step 202 upon receipt of the next request.

If it is determined in the second step 204, that the destination does not belong to the part of the communication network under control of the operator receiving the request, the process 200 proceeds with a fifth step 210.

In the fifth step 210, it is checked if the destination is listed in a database, e.g., the database 132 of Fig.1.

If it is determined in the fifth step 210 that the destination is listed in the database, the process continues with a sixth step 212.

In the sixth step 212, the database is consulted to check whether the communication parameters of the destination are indicative of communication capabilities of the destination that are suitable for a communication session with a higher quality of service.

If it is determined in the sixth step 212 that the destination is not suitable for a communication session with a higher quality of service, the process 200 continues to a seventh step 214

In the seventh step 214, the communication is set up and routed via the second sub-network providing a lower quality of service. The process 200 then returns to the fourth step 208, discussed above.

If it is determined in the sixth step 212 that the destination is suitable for a communication session with a higher quality of service, the process 200 continues to an eighth step 216.

In the eighth step 216, the communication is set up and routed via the first sub-network providing the higher quality of service. The process 200 then returns to the fourth step 208, discussed above.

If it is determined in the fifth step 210 that the destination is not listed in the database, the process 200 proceeds with a ninth step 218.

In the ninth step 218, it is determined whether or not an attempt is to be made to set up the communication session requested using the higher quality of service. At this point it is not known whether or not the communication session can actually be implemented using the higher quality of service.

If it is determined to attempt setting up the communication session using the higher quality of service, and if the setting up succeeds, the routing of the call via the first sub-network, here the IGW 118, opens up the possibility to add to the database 132 information about the communication capabilities of communication devices not yet listed in the database 132. Accordingly, the contents of the database 132 automatically grows (as the communication capabilities of increasingly more communication devices will get stored) and the outcomes of the fifth step 210 and of the sixth step 212 becomes more accurate. If it is determined in the ninth step 218 to try to set up the communication session requested and using the higher quality of service, the process 200 continues with the eighth step 216 discussed above, after which the process returns to the fourth step 208, discussed above.

If it is determined in the ninth step 218 to not try to set up the requested communication session using the higher quality of service, the process proceeds with the seventh step 214, discussed above, and then returns to the fourth step, discussed above.

## Claims

1. A method of processing a request for setting up a communication session via a communication network (100) between a first communication device (108) and a second communication device (124), wherein:
the communication network comprises:
a first sub-network (118) configured for providing a higher quality of service for communicating via the communication network; and
a second sub-network (104) configured for providing a lower quality of service for communicating via the communication network; and
the method comprises controlling a routing of the communicating via the first sub-network or via the second sub-network in dependence on whether the first communication device and the second communication device are configured for using the higher quality of service for communicating with each other.

2. The method of claim 1, wherein:
the controlling comprises:
determining for the first communication device if the first communication device has one or more first communication capabilities configured for using the higher quality of service;
determining (212) for the second communication device if the second communication device has one or more second communication capabilities configured for using the higher quality of service;
if the first communication device has a specific first communication capability configured for communicating using the higher quality of service, and if the second communication device has a specific second communication capability configured for communicating using the higher quality of service, determining if the specific first communication capability and the specific second communication capability enable the communication session between the first communication device and the second communication device using the higher quality of service;
if the first communication capability and the second communication capability enable the communication session using the higher quality of service, routing (216) the communicating via the first sub-network, and
if the first communication capability and the second communication capability do not enable the communication session using the higher quality of service, routing (214) the communicating via the second sub-network.

3. The method of claim 2, wherein:
the determining of whether the first communication device has one or more first communication capabilities configured for using the higher quality of service comprises at least one of the following:
identifying one or more first communication parameters, representative of at least one first communication capability and declared by the first communication device during execution of a negotiation protocol executed between the first communication device and the second communication device during an attempt to set up the communication session; and
consulting data storage listing one or more first communication parameters representative of at least one first communication capability.

4. The method of claim 3, wherein the data storage comprises a database (132) that is operative to store the one or more first communication parameters as declared by the first communication device during the execution of the negotiation protocol during a setting up of one or more previous communication sessions involving the first communication device.

5. The method of claim 2, wherein:
the determining of whether the second communication device has one or more second communication capabilities configured for using the higher quality of service comprises at least one of the following:
identifying one or more second communication parameters, representative of at least one second communication capability and declared by the second communication device during execution of a negotiation protocol executed between the first communication device and the second communication device during an attempt to set up the communication session; and
consulting data storage listing one or more second communication parameters representative of at least one second communication capability.

6. The method of claim 5, wherein data storage comprises a database (132) that is operative to store the one or more second communication parameters as declared by the second communication device during the execution of the negotiation protocol during a setting up of one or more previous communication sessions involving the second communication device.
